# EUROPÄISCHE PATENTSCHRIFT

(11) **EP 3 394 572 B1**
(45) Veröffentlichungstag und Bekanntmachung des Hinweises auf die Patenterteilung: **23.02.2022**
(21) Anmeldenummer: 16804702.5
(22) Anmeldetag: 16.11.2016
(51) Int. Cl.: G01D 3/08, G01D 21/00

(54) **MESSGERÄT DER MESS- UND AUTOMATISIERUNGSTECHNIK**
MEASURING APPARATUS OF THE MEASURING AND AUTOMATION TECHNOLOGY
APPAREIL DE MESURE RELEVANT DU DOMAINE TECHNIQUE DE LA MESURE ET DE L'AUTOMATISATION

(30) Priorität: 21.12.2015 DE 102015122442
(43) Veröffentlichungstag der Anmeldung: 31.10.2018
(73) Patentinhaber: Endress+Hauser Flowtec AG, 4153 Reinach (CH)
(72) Erfinder: BRUDERMANN, Matthias, 4313 Moehlin (CH); FINK, Nikolai, 4147 Aesch (CH); SCHWEIZER, Christoph, 4242 Laufen (CH); KIRST, Michael, 79539 Lörrach (DE)
(74) Vertreter: Andres, Angelika Maria
(86) Internationale Anmeldenummer: PCT/EP2016/077800
(87) Internationale Veröffentlichungsnummer: WO 2017/108274

(56) Entgegenhaltungen:
- DE-A1-102013 114 665
- US-A1- 2003 129 944

## Beschreibung

Die Erfindung betrifft ein Messgerät der Mess- und Automatisierungstechnik, welches Messgerät mindestens zwei Ausgabeeinheiten zum Ausgeben von Messwerten aufweist.

Messgeräte mit mindestens zwei Ausgabeeinheiten für die Ausgabe von Messwerten werden für verschiedene Zwecke eingesetzt. Ein Grund für die Verwendung von Messgeräten mit zwei Ausgabeeinheiten ist die Möglichkeit der Überprüfung der Funktionsfähigkeit einer ersten Ausgabeeinheit, was zur Erkennung eines Messgeräteausfalls genutzt werden kann. Ein weiterer Grund für die Verwendung solcher Messgeräte kann der Wunsch sein, die Messwertausgabe an einem Ausgang einer zweiten Ausgabeeinheit gegenüber der Messwertausgabe an einem Ausgang einer ersten Ausgabeeinheit in einer charakteristischen Weise zu ändern. Dies kann zur Erschwerung von Manipulationen der Messwertausgabe genutzt werden. Im technischen Bereich von Abfüllanlagen kann dieses Merkmal von Vorteil sein. Solche Messgeräte bringen erhöhte Anforderungen an die zeitliche Steuerung der einzelnen Ausgabeeinheiten mit sich, da diese im Wesentlichen zeitlich synchron arbeiten müssen, um die gewünschte Funktion zu ermöglichen. Das synchrone Arbeiten der einzelnen Ausgabeeinheiten lässt sich beispielsweise dadurch erreichen, dass eine Betriebsschaltung die einzelnen Ausgabeeinheiten entsprechend steuert. Das erhöht jedoch die Anforderungen an die Kommunikation zwischen der Betriebsschaltung und den einzelnen Ausgabeeinheiten. Einfacher ist es, eine Kommunikation zwischen den Ausgabeeinheiten selbst einzurichten. Der Stand der Technik, offenbart beispielsweise durch die Patentanmeldung DE102012104258A1, umfasst Messgeräte mit zwei oder mehreren Ausgabeeinheiten, welche Leitungsgebunden miteinander gekoppelt sind. Nachteilhaft an einer solchen Leitungsverbindung ist der Platzbedarf in Form von Leitungen oder Kabelbrücken oder Steckverbindungen. Im Falle der Verwendung von Kabelbrücken besteht der zusätzliche Nachteil, dass sie erst dann eingerichtet werden kann, wenn die Ausgabeeinheiten an ihrer vorgesehenen Stelle angebracht sind. Der Fertigungsaufwand ist somit erhöht und die Fertigung somit teurer. Die Patentschriften DE1020 13114665 A1 und US 2003/129944 A1 offenbaren Messgeräte mit Sensorköpfen, die teilweise untereinander bzw. mit dem Messgerät über Kommunikationsschnittstellen verbunden sind.

**Aufgabe der vorliegenden Erfindung** ist es daher ein einfaches und robustes Messgerät mit mindestens zwei untereinander kommunizierenden modularen Ausgabeeinheiten vorzuschlagen, welches Messgerät die Funktion der Überprüfung einer ersten Ausgabeeinheit sowie die Funktion der zeitlich synchronen Steuerung der Ausgänge der beiden Ausgabeeinheiten aufweist, wobei ein erhöhter Leitungsaufwand sowie ein erhöhter Fertigungsaufwand vermieden wird. Diese Aufgabe wird erfindungsgemäß gelöst durch ein Messgerät nach dem unabhängigen Anspruch 1 sowie durch ein Verfahren nach dem unabhängigen Anspruch 9.

**Das erfindungsgemäße Messgerät** umfasst einen Messaufnehmer zum Erfassen einer physikalischen oder chemischen Messgröße und zum Generieren wenigstens eines mit nämlicher Messgröße korrespondierenden Messwerts;
eine mit dem Messaufnehmer elektrisch gekoppelte elektronische Betriebsschaltung mit mindestens einer ersten Kommunikationsschnittstelle, wobei die Betriebsschaltung dazu eingerichtet ist, mindestens ein mit dem Messwert korrelierendes, erstes elektronisches Signal zu erzeugen, welches über die erste Kommunikationsschnittstelle übertragen wird;
und mindestens eine erste Ausgabeeinheit mit mindestens einer zweiten
Kommunikationsschnittstelle und mindestens einem elektrischen Ausgang und mindestens einem optischen Ausgang, wobei die erste Ausgabeeinheit dazu eingerichtet ist, das erste Signal über die zweite Kommunikationsschnittstelle zu empfangen und dieses in ein viertes, elektrisches Signal zu wandeln und in ein zweites, optisches Signal zu wandeln, wobei das vierte Signal über den elektrischen Ausgang sowie das zweite Signal über den optischen Ausgang ausgegeben wird;
und mindestens eine zweite Ausgabeeinheit mit mindestens einem optischen Eingang und einem elektrischen Ausgang;
wobei der optische Eingang der zweiten Ausgabeeinheit an den optischen Ausgang der ersten Ausgabeeinheit gekoppelt ist, wobei die zweite Ausgabeeinheit dazu eingerichtet ist, das zweite Signal über den optischen Eingang zu empfangen und in ein fünftes, elektrisches Signal zu wandeln,
wobei die zweite Ausgabeeinheit eine dritte Kommunikationsschnittstelle zur Betriebsschaltung aufweist und die Betriebsschaltung dazu eingerichtet ist, das erste Signal auch an die zweite Ausgabeeinheit zu senden, wobei die zweite Ausgabeeinheit dazu eingerichtet ist, das von der Betriebsschaltung gesendete erste Signal mit dem von der ersten Ausgabeeinheit erhaltenen zweiten Signal zu vergleichen und nach Vergleich der Signale über die dritte Kommunikationsschnittstelle ein drittes Signal an die Betriebsschaltung zu senden, wobei das dritte Signal Information über das Ergebnis des Vergleichs enthält.

In einer vorteilhaften Ausführung leitet die erste Ausgabeeinheit das zweite, optische Signal vom vierten Signal ab.

In einer vorteilhaften Ausführung ist mittels der Betriebsschaltung eine Wahl zwischen das zweite Signal vom ersten Signal und das zweite Signal vom vierten Signal abzuleiten, durchführbar. Dadurch ergibt sich die Möglichkeit festzustellen, ob die Signalwandlung des ersten Signals in das vierte Signal fehlerhaft ist. Im Falle wesentlicher Unterschiede zwischen dem zweiten Signal, welches vom ersten Signal abgeleitet ist und dem zweiten Signal, welches vom vierten Signal abgeleitet ist, kann auf eine Fehlfunktion der Signalwandlung geschlossen werden.

Erfindungsgemäß weist die zweite Ausgabeeinheit eine dritte Kommunikationsschnittstelle zur Betriebsschaltung auf.

In einer vorteilhaften Ausführung weist mindestens ein Parameter des fünften Signals gegenüber dem vierten Signal eine charakteristische Veränderung auf, wobei der mindestens eine Parameter ausgewählt ist aus:
Phasenlage bezogen auf das vierte Signal,
Frequenz,
Amplitude,
Ausgabezeitpunkt bezogen auf das vierte Signal,
wobei die charakteristische Veränderung mittels der Betriebsschaltung festlegbar ist.

In einer vorteilhaften Ausführung sind die mindestens zwei Ausgabeeinheiten galvanisch getrennt.

Durch die galvanische Trennung lässt sich eine gegenseitige Beeinflussung von elektronischen Systemen, welche an die Ausgänge der Ausgabeeinheiten angeschlossen sind, unterbinden. So führt ein unterschiedliches Massepotential von angeschlossenen elektronischen Systemen bei fehlender galvanischer Trennung zu unerwünschten Stromflüssen durch die Ausgabeeinheiten, was Schäden an elektronischen Komponenten verursachen kann.

In einer vorteilhaften Ausführung sind die mindestens eine erste Ausgabeeinheit und die mindestens eine zweite Ausgabeeinheit baugleich. Damit lässt sich die Fertigung und Wartung eines Messgeräts bedeutend vereinfachen und die Kosten verringern.

Erfindungsgemäß ist die Betriebsschaltung dazu eingerichtet, das erste Signal auch an die zweite Ausgabeeinheit zu senden, wobei die zweite Ausgabeeinheit dazu eingerichtet ist, das von der Betriebsschaltung gesendete erste Signal mit dem von der ersten Ausgabeeinheit erhaltenen zweiten Signal zu vergleichen und nach Vergleich der Signale über die dritte Kommunikationsschnittstelle ein drittes Signal an die Betriebsschaltung zu senden, wobei das dritte Signal Information über das Ergebnis des Vergleichs enthält.

In einer vorteilhaften Ausführung ist die zweite Ausgabeeinheit dazu eingerichtet, das empfangene zweite, optische Signal in ein elektrisches Signal zu wandeln und über die dritte Kommunikationsschnittstelle an die Betriebsschaltung zu senden, wobei die Betriebsschaltung einen Vergleich des an die erste Ausgabeeinheit gesendeten Signals mit dem von der zweiten Ausgabeeinheit erhaltenen Signal durchführt.

In einer vorteilhaften Ausführung ist die die erste und/oder die zweite Ausgabeeinheit dazu eingerichtet, bei einer Mindestabweichung von mindestens einem Signalparameter der verglichenen Signale ein Warnsignal an ihrem jeweiligen elektrischen Signalausgang zu erzeugen. Der Vergleich der Signale basiert beispielsweise auf der Messung des Amplitudenverlaufs und darauffolgender Analyse des Signal-zu-Rauschen-Verhältnisses. Es können auch ein Versatz von Signalflanken oder die Signalamplituden zu einem Vergleich herangezogen werden.

**Ein erfindungsgemäßes Verfahren** zum Betreiben des erfindungsgemäßen Messgeräts umfasst dabei folgende
Schritte:
Erfassen einer physikalischen oder chemischen Messgröße durch den Messaufnehmer und Senden der Messgröße an die elektronische Betriebsschaltung;
Auswahl der mindestens einen ersten Ausgabeeinheit durch die Betriebsschaltung und Senden des ersten Signals an die erste Ausgabeeinheit;
Empfang des ersten Signals durch die erste Ausgabeeinheit und Wandeln des ersten Signals in das vierte Signal und zweite Signal und Ausgabe des vierten Signals am elektrischen Signalausgang und Ausgabe des zweiten Signals am optischen Signalausgang;
Empfang des zweiten Signals durch die zweite Ausgabeeinheit und Wandeln des zweiten Signals in das fünfte Signal und Ausgabe des fünften Signals am elektrischen Signalausgang.

Ein weiteres **Verfahren** zum Betreiben des erfindungsgemäßen Messgeräts umfasst dabei folgende
Schritte:
Erfassen einer physikalischen oder chemischen Messgröße durch den Messaufnehmer und Senden der Messgröße an die elektronische Betriebsschaltung;
Auswahl der mindestens einen ersten Ausgabeeinheit durch die Betriebsschaltung und Senden des ersten Signals an die erste Ausgabeeinheit und Senden des ersten Signals an die zweite Ausgabeeinheit;
Empfang des ersten Signals durch die erste Ausgabeeinheit und Wandeln des ersten Signals in das vierte Signal und zweite Signal und Ausgabe des vierten Signals am elektrischen Signalausgang und Ausgabe des zweiten Signals am optischen Signalausgang;
Empfang des ersten Signals und des zweiten Signals durch die zweite Ausgabeeinheit und Wandeln des zweiten Signals in das fünfte Signal und Ausgabe des fünften Signals am elektrischen Signalausgang;
Vergleich des ersten Signals mit dem zweiten Signal durch die zweite Ausgabeeinheit und Übermittlung des Ergebnisses des Vergleichs an die Betriebsschaltung mittels eines dritten Signals. Veranlassen der Ausgabe eines Warnsignals durch die erste und/oder die zweite Ausgabeeinheit an ihrem jeweiligen elektrischen Signalausgang durch die Betriebsschaltung bei einer Mindestabweichung von mindestens einem Signalparameter der verglichenen Signale.

**Ein** weiteres **Verfahren** zum Betreiben des erfindungsgemäßen Messgeräts umfasst dabei folgende
Schritte:
Erfassen einer physikalischen oder chemischen Messgröße durch den Messaufnehmer und Senden der Messgröße an die elektronische Betriebsschaltung;
Auswahl der mindestens einen ersten Ausgabeeinheit durch die Betriebsschaltung und Senden des ersten Signals an die erste Ausgabeeinheit und Senden des ersten Signals an die zweite Ausgabeeinheit;
Empfang des ersten Signals durch die erste Ausgabeeinheit und Wandeln des ersten Signals in das vierte Signal und zweite Signal und Ausgabe des vierten Signals am elektrischen Signalausgang und Ausgabe des zweiten Signals am optischen Signalausgang;
Empfang des zweiten Signals durch die zweite Ausgabeeinheit und Wandeln des zweiten Signals in das fünfte Signal und Ausgabe des fünften Signals am elektrischen Signalausgang und Wandeln des zweiten Signals in ein elektrisches Signal und Senden des elektrischen Signals an die Betriebsschaltung;
Vergleich des an die erste Ausgabeeinheit gesendeten ersten Signals mit dem von der zweiten Ausgabeeinheit empfangenen zweiten Signal durch die Betriebsschaltung.

Veranlassen der Ausgabe eines Warnsignals durch die erste und/oder die zweite Ausgabeeinheit an ihrem jeweiligen elektrischen Signalausgang durch die Betriebsschaltung bei einer Mindestabweichung von mindestens einem Signalparameter der verglichenen Signale.

In einer vorteilhaften Ausführung des Verfahrens ist dem fünften Signal mindestens eine charakteristische Änderung aufgeprägt, wobei die charakteristische Veränderung beispielsweise eine Phasenlage bezogen auf das vierte Signal, Frequenz, Amplitude oder Ausgabezeitpunkt bezogen auf das vierte Signal sein kann

In einer vorteilhaften Ausführung des Verfahrens wird nach Auswahl der ersten Ausgabeeinheit mittels der Betriebsschaltung eine Wahl zwischen das zweite Signal vom ersten Signal und das zweite Signal vom vierten Signal abzuleiten, durchgeführt.

Es wird also durch die vorliegende Erfindung ein einfaches und robustes Messgerät mit zwei Ausgabeeinheiten vorgeschlagen, bei dem der Fertigungsaufwand reduziert ist und die Ausgabeeinheiten galvanisch getrennt sind.

Im Folgenden wird die Erfindung anhand von in den Zeichnungen dargestellten Ausführungsbeispielen näher erläutert:
Es zeigt:
Fig. 1: den schematischen Aufbau eines erfindungsgemäßen Messgeräts;
Fig. 2: ein beispielhaftes Flussdiagramm zum Betreiben eines Verfahrens zum Betreiben eines Messgeräts;
Fig. 3: ein beispielhaftes Flussdiagramm zum Betreiben eines Verfahrens zum Betreiben eines Messgeräts;
Fig. 4: ein beispielhaftes Flussdiagramm zum Betreiben eines Verfahrens zum Betreiben eines Messgeräts;

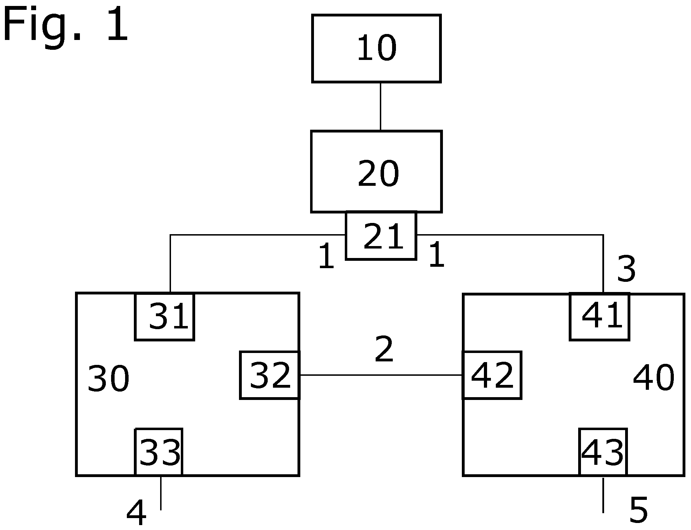

Fig. 1 zeigt einen schematischen Aufbau eines erfindungsgemäßen Messgeräts. Das hier dargestellte Messgerät umfasst einen Messaufnehmer 10; eine Betriebsschaltung 20 mit einer ersten Kommunikationsschnittstelle 21; eine erste Ausgabeeinheit 30 mit einer zweiten Kommunikationsschnittstelle 31, einem optischen Ausgang 32 und einem elektrischen Ausgang 33; und eine zweite Ausgabeeinheit 40 mit einer dritten Kommunikationsschnittstelle 41, einem optischen Eingang 42 und einem elektrischen Ausgang 43. Der Messaufnehmer ist dazu eingerichtet, eine physikalische oder chemische Messgröße zu erfassen und wenigstens einen mit nämlicher Messgröße korrespondierenden Messwert zu erzeugen und an die Betriebsschaltung zu senden. Die Betriebsschaltung ist dazu eingerichtet, mindestens ein mit dem Messwert korrelierendes, erstes elektronisches Signal 1 zu erzeugen, welches über die erste Kommunikationsschnittstelle 21 zumindest an die erste Ausgabeeinheit 30 übertragen wird. Die erste Ausgabeeinheit 30 ist dazu eingerichtet, das erste Signal 1 über die zweite Kommunikationsschnittstelle 31 zu empfangen und in ein zweites Signal und viertes Signal zu wandeln, wobei das zweite Signal über den optischen Ausgang 32 an die zweite Ausgabeeinheit 40 übertragen wird und wobei das vierte Signal am elektrischen Ausgang 33 ausgegeben wird. Die zweite Ausgabeeinheit 40 ist dazu eingerichtet, das zweite Signal 2 über den optischen Eingang 42 zu empfangen und in ein fünftes Signal 5 zu wandeln und am elektrischen Ausgang 43 auszugeben.

Die zweite Ausgabeeinheit 40 weist eine dritte Kommunikationsschnittstelle 41 auf, über welche die zweite Ausgabeeinheit 40 mit der Betriebsschaltung kommunizieren kann.

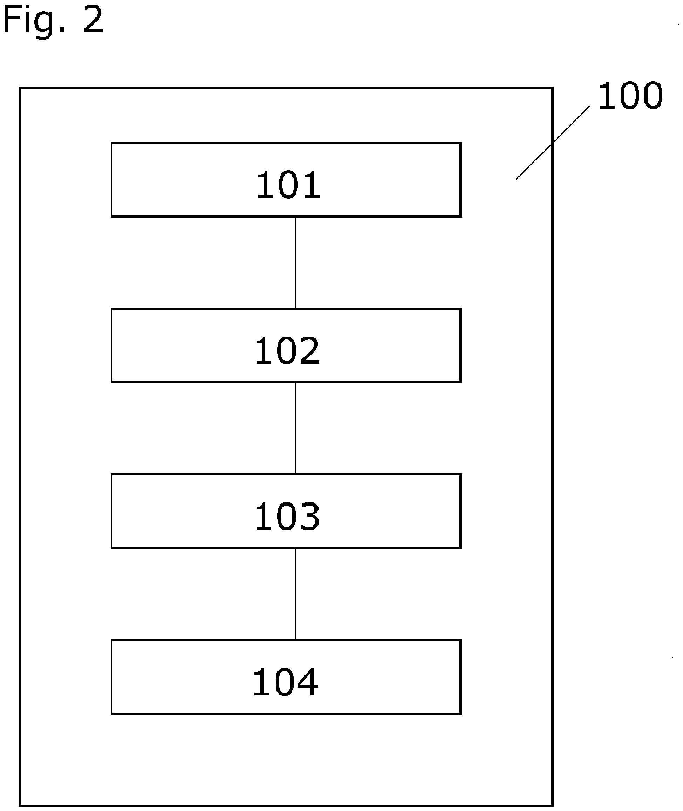

Fig. 2 zeigt einen schematischen Ablauf eines erfindungsgemäßen Verfahrens 100. In einem ersten Schritt 101 erfasst der Messaufnehmer 10 eine physikalische oder chemische Messgröße und sendet die Messgröße an die elektronische Betriebsschaltung. In einem zweiten Schritt 102 wählt die Betriebsschaltung 20 eine erste Ausgabeeinheit 30 und sendet ein erstes Signal 1 an die erste Ausgabeeinheit 30. In einem dritten Schritt 103 empfängt die erste Ausgabeeinheit das erste Signal und wandelt es in das vierte Signal 4 und zweite Signal 2 und gibt das vierte Signal 4 am elektrischen Signalausgang 33 und das zweite Signal am optischen Signalausgang 34 aus. In einem vierten Schritt 104 wird das zweite Signal 2 durch die zweite Ausgabeeinheit 40 über den optischen Eingang 42 empfangen und in das fünfte Signal 5 gewandelt und am elektrischen Ausgang ausgegeben, wobei dem fünften Signal 5 mindestens
eine charakteristische Änderung aufgeprägt ist, wobei die charakteristische Änderung die Phasenlage bezogen auf das vierte Signal, Frequenz, Amplitude und Ausgabezeitpunkt bezogen auf das vierte Signal umfassen kann.

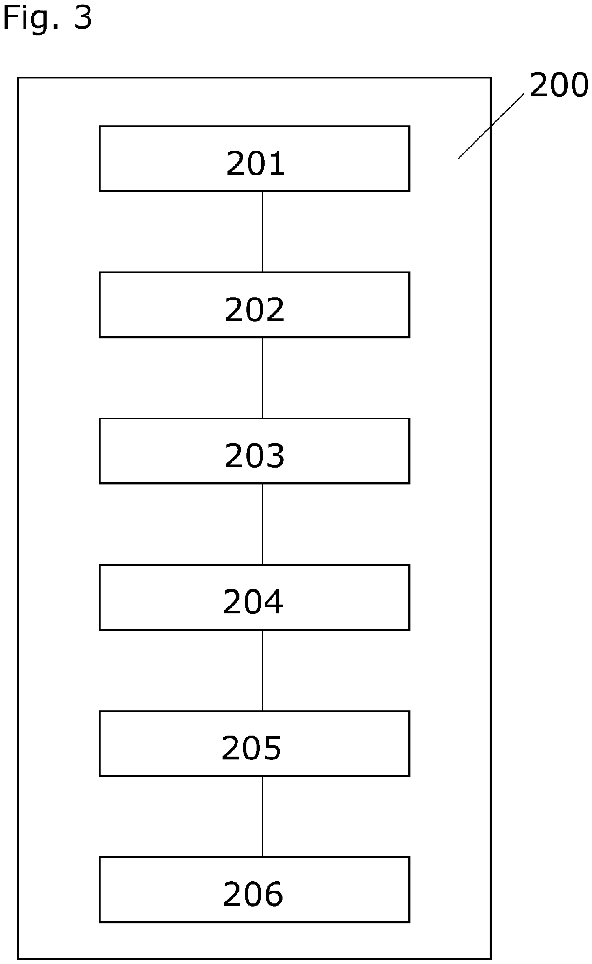

Fig. 3 zeigt einen schematischen Ablauf eines erfindungsgemäßen Verfahrens 200. In einem ersten Schritt 201 erfasst der Messaufnehmer 10 eine physikalische oder chemische Messgröße und sendet diese Messgröße an die elektronische Betriebsschaltung. In einem zweiten Schritt 202 wählt die Betriebsschaltung 20 eine erste Ausgabeeinheit 30 und sendet ein erstes Signal 1 an die erste
Ausgabeeinheit 30 und sendet ein erstes Signal 1 an die zweite Ausgabeeinheit 40. In einem dritten Schritt 203 empfängt die erste Ausgabeeinheit das erste Signal und wandelt es in das vierte Signal 4 und zweite Signal 2 und gibt das vierte Signal 4 am elektrischen Signalausgang 33 und das zweite Signal am optischen Signalausgang 34 aus. In einem vierten Schritt 204 wird das zweite Signal 2 durch die zweite Ausgabeeinheit 40 über den optischen Eingang 42 empfangen und in das fünfte Signal 5 gewandelt und dieses am elektrischen Ausgang ausgegeben, wobei dem fünften Signal 5 mindestens eine charakteristische Änderung aufgeprägt ist, wobei die charakteristische Änderung die Phasenlage bezogen auf das vierte Signal, Frequenz und Amplitude umfassen kann. Außerdem empfängt die zweite Ausgabeeinheit 40 das erste Signal 1 über die dritte Kommunikationseinheit 41. In einem fünften Schritt 205 vergleicht die zweite Ausgabeeinheit das erste Signal mit dem zweiten Signal und übermittelt das Ergebnis des Vergleichs an die Betriebsschaltung mittels eines dritten Signals über die dritte Kommunikationsschnittstelle 41. Der Vergleich basiert dabei auf Signalparametern wie beispielsweise Amplitude, Frequenz oder Phasenlage der Signale zueinander. Falls notwendig, wird in einem sechsten Schritt 206 die Ausgabe eines Warnsignals durch die erste und/oder die zweite Ausgabeeinheit an ihrem jeweiligen elektrischen Signalausgang durch die Betriebsschaltung bei einer Mindestabweichung von mindestens einem Signalparameter der verglichenen Signale veranlasst.

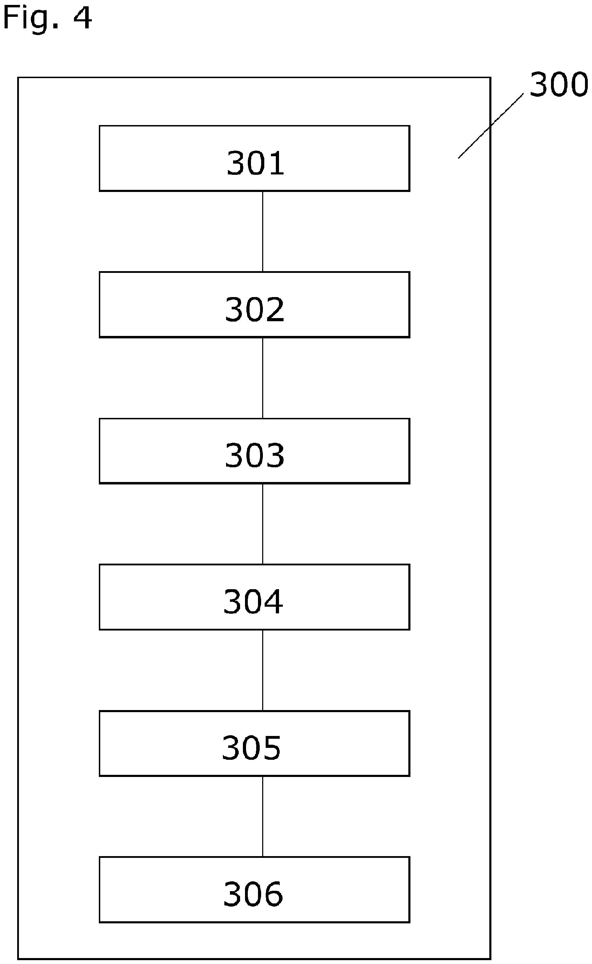

Fig. 4 zeigt einen schematischen Ablauf eines erfindungsgemäßen Verfahrens 300. In einem ersten Schritt 301 erfasst der Messaufnehmer 10 eine physikalische oder chemische Messgröße und sendet diese Messgröße an die elektronische Betriebsschaltung. In einem zweiten Schritt 302 wählt die Betriebsschaltung 20 eine erste Ausgabeeinheit 30 und sendet ein erstes Signal 1 an die erste Ausgabeeinheit 30 und sendet ein erstes Signal 1 an die zweite Ausgabeeinheit 40. In einem dritten Schritt 303 empfängt die erste Ausgabeeinheit das erste Signal und wandelt es in das vierte Signal 4 und zweite Signal 2 und gibt das vierte Signal 4 am elektrischen Signalausgang 33 und das zweite Signal am optischen Signalausgang 32 aus. In einem vierten Schritt 304 wird das zweite Signal 2 durch die zweite Ausgabeeinheit 40 über den optischen Eingang 42 empfangen und in das fünfte Signal 5 gewandelt und dieses am elektrischen Ausgang ausgegeben, wobei dem fünften Signal 5 mindestens eine charakteristische Änderung aufgeprägt ist, wobei die charakteristische Änderung die Phasenlage bezogen auf das vierte Signal, Frequenz und Amplitude umfassen kann. Außerdem wandelt die zweite Ausgabeeinheit das zweite Signal in ein elektrisches Signal und sendet dieses über die dritte Kommunikationseinheit 41 an die Betriebsschaltung 20. In einem fünften Schritt 205 vergleicht die Betriebsschaltung das erste Signal mit dem zweiten Signal. Der Vergleich basiert dabei auf Signalparametern wie beispielsweise Amplitude, Frequenz oder Phasenlage der Signale zueinander. Falls notwendig, wird in einem sechsten Schritt 206 die Ausgabe eines Warnsignals durch die erste und/oder die zweite Ausgabeeinheit an ihrem jeweiligen elektrischen Signalausgang durch die Betriebsschaltung bei einer Mindestabweichung von mindestens einem Signalparameter der verglichenen Signale veranlasst.

### Bezugszeichenliste

- 1: erstes Signal
- 2: zweites Signal
- 3: drittes Signal
- 4: viertes Signal
- 5: fünftes Signal
- 10: Messaufnehmer
- 20: Betriebsschaltung
- 21: erste Kommunikationsschnittstelle
- 30: erste Ausgabeeinheit
- 31: zweite Kommunikationsschnittstelle
- 32: optischer Ausgang
- 33: elektrischer Ausgang der ersten Ausgabeeinheit
- 40: zweite Ausgabeeinheit
- 41: dritte Kommunikationsschnittstelle
- 42: optischer Eingang
- 43: elektrischer Ausgang der zweiten Ausgabeeinheit
- 100: Ein erstes Verfahren zum Betreiben des Messgeräts
- 101: Erfassen einer physikalischen oder chemischen Messgröße durch den Messaufnehmer und Senden der Messgröße an die elektronische Betriebsschaltung;
- 102: Auswahl der mindestens einen ersten Ausgabeeinheit durch die Betriebsschaltung und Senden des ersten Signals an die erste Ausgabeeinheit;
- 103: Empfang des ersten Signals durch die erste Ausgabeeinheit und Wandeln des ersten Signals in das vierte Signal und zweite Signal und Ausgabe des vierten Signals am elektrischen Signalausgang und Ausgabe des zweiten Signals am optischen Signalausgang;
- 104: Empfang des zweiten Signals durch die zweite Ausgabeeinheit und Wandeln in das fünfte Signal und Ausgabe am elektrischen Ausgang, wobei dem fünften Signal mindestens eine charakteristische Änderung aufgeprägt ist;
- 200: Ein zweites Verfahren zum Betreiben des Messgeräts
- 201: Erfassen einer physikalischen oder chemischen Messgröße durch den Messaufnehmer und Senden der Messgröße an die elektronische Betriebsschaltung;
- 202: Auswahl der mindestens einen ersten Ausgabeeinheit durch die Betriebsschaltung und Senden des ersten Signals an die erste Ausgabeeinheit und Senden des ersten Signals an die zweite Ausgabeeinheit;
- 203: Empfang des ersten Signals durch die erste Ausgabeeinheit und Wandeln des ersten Signals in das vierte Signal und zweite Signal und Ausgabe des vierten Signals am elektrischen Signalausgang und Ausgabe des zweiten Signals am optischen Signalausgang;
- 204: Empfang des ersten Signals und des zweiten Signals durch die zweite Ausgabeeinheit und Wandeln des zweiten Signals in das fünfte Signal und Ausgabe des fünften Signals am elektrischen Signalausgang, wobei dem fünften Signal mindestens eine charakteristische Änderung aufgeprägt ist;
- 205: Vergleich des ersten Signals mit dem zweiten Signal durch die zweite Ausgabeeinheit und Übermittlung des Ergebnisses des Vergleichs an die Betriebsschaltung mittels eines dritten Signals.
- 206: Veranlassen der Ausgabe eines Warnsignals durch die erste und/oder die zweite Ausgabeeinheit an ihrem jeweiligen elektrischen Signalausgang durch die Betriebsschaltung bei einer Mindestabweichung von mindestens einem Signalparameter der verglichenen Signale.
- 300: Ein drittes Verfahren zum Betreiben des Messgeräts
- 301: Erfassen einer physikalischen oder chemischen Messgröße durch den Messaufnehmer und Senden der Messgröße an die elektronische Betriebsschaltung;
- 302: Auswahl der mindestens einen ersten Ausgabeeinheit durch die Betriebsschaltung und Senden des ersten Signals an die erste Ausgabeeinheit;
- 303: Empfang des ersten Signals durch die erste Ausgabeeinheit und Wandeln des ersten Signals in das vierte Signal und zweite Signal und Ausgabe des vierten Signals am elektrischen Signalausgang und Ausgabe des zweiten Signals am optischen Signalausgang;
- 304: Empfang des zweiten Signals durch die zweite Ausgabeeinheit und fünfte Signal und Ausgabe des fünften Signals am elektrischen Signalausgang, wobei dem fünften Signal mindestens eine charakteristische Änderung aufgeprägt ist und Senden des zweiten Signals an die Betriebsschaltung;
- 305: Vergleich des an die erste Ausgabeeinheit ersten Signals mit dem von der zweiten Ausgabeeinheit empfangenen zweiten Signal durch die Betriebsschaltung.
- 306: Veranlassen der Ausgabe eines Warnsignals durch die erste und/oder die zweite Ausgabeeinheit an ihrem jeweiligen elektrischen Signalausgang durch die Betriebsschaltung bei einer Mindestabweichung von mindestens einem Signalparameter der verglichenen Signale.

## Patentansprüche

1. Messgerät, umfassend:
einen Messaufnehmer (10) zum Erfassen einer physikalischen oder chemischen Messgröße und zum Generieren wenigstens eines mit nämlicher Messgröße korrespondierenden Messwerts;
eine mit dem Messaufnehmer (10) elektrisch gekoppelte elektronische Betriebsschaltung (20) mit mindestens einer ersten Kommunikationsschnittstelle (21), wobei die Betriebsschaltung (20) dazu eingerichtet ist, mindestens ein mit dem Messwert korrelierendes, erstes elektronisches Signal (1) zu erzeugen, welches über die erste Kommunikationsschnittstelle (21) übertragen wird;
und mindestens eine erste Ausgabeeinheit (30) mit mindestens einer zweiten Kommunikationsschnittstelle (31) und mindestens einem elektrischen Ausgang (33) und mindestens einem optischen Ausgang (32), wobei die erste Ausgabeeinheit (30) dazu eingerichtet ist, das erste Signal (1) über die zweite Kommunikationsschnittstelle (31) zu empfangen und dieses in ein viertes, elektrisches Signal (4) zu wandeln und in ein zweites, optisches Signal (2) zu wandeln, wobei das vierte Signal (4) über den elektrischen Ausgang (33) sowie das zweite Signal über den optischen Ausgang (32) ausgegeben wird;
und mindestens eine zweite Ausgabeeinheit (40) mit mindestens einem optischen Eingang (42) und einem elektrischen Ausgang (43);
wobei der optische Eingang (42) der zweiten Ausgabeeinheit (40) an den optischen Ausgang (32) der ersten Ausgabeeinheit (30) gekoppelt ist, wobei die zweite Ausgabeeinheit (40) dazu eingerichtet ist, das zweite Signal (2) über den optischen Eingang (42) zu empfangen und in ein fünftes, elektrisches Signal (5) zu wandeln,
wobei die zweite Ausgabeeinheit (40) eine dritte Kommunikationsschnittstelle (41) zur Betriebsschaltung (20) aufweist,
**dadurch gekennzeichnet, dass**
die Betriebsschaltung (20) dazu eingerichtet ist, das erste Signal (1) auch an die zweite Ausgabeeinheit (40) zu senden, wobei die zweite Ausgabeeinheit (40) dazu eingerichtet ist, das von der Betriebsschaltung (20) gesendete erste Signal (1) mit dem von der ersten Ausgabeeinheit (30) erhaltenen zweiten Signal (2) zu vergleichen und nach Vergleich der Signale über die dritte
Kommunikationsschnittstelle (41) ein drittes Signal (3) an die Betriebsschaltung (20) zu senden, wobei das dritte Signal (3) Information über das Ergebnis des Vergleichs enthält.

2. Messgerät nach Anspruch 1,
wobei die erste Ausgabeeinheit (30) das zweite, optische Signal (2) vom vierten Signal (4) ableitet.

3. Messgerät nach Anspruch 1 oder 2,
wobei mittels der Betriebsschaltung (20) eine Wahl zwischen das zweite Signal (2) vom ersten Signal (1) und das zweite Signal (2) vom vierten Signal (4) abzuleiten, durchführbar ist.

4. Messgerät nach einem der vorigen Ansprüche,
wobei mindestens ein Parameter des fünften Signals (5) gegenüber dem vierten Signal (4) eine charakteristische Veränderung aufweist, wobei der mindestens eine Parameter ausgewählt ist aus:
Phasenlage bezogen auf das vierte Signal,
Frequenz,
Amplitude,
Ausgabezeitpunkt bezogen auf das vierte Signal,
wobei die charakteristische Veränderung durch die Betriebsschaltung festlegbar ist.

5. Messgerät nach einem der vorigen Ansprüche,
wobei die mindestens zwei Ausgabeeinheiten (30, 40) galvanisch getrennt sind.

6. Messgerät nach einem der vorigen Ansprüche,
wobei die mindestens eine erste Ausgabeeinheit (30) und die mindestens eine zweite Ausgabeeinheit (40) baugleich sind.

7. Messgerät nach einem der vorherigen Ansprüche,
wobei die zweite Ausgabeeinheit (40) dazu eingerichtet ist, das empfangene zweite, optische Signal (2) in ein elektrisches Signal zu wandeln über die dritte Kommunikationsschnittstelle (41) an die Betriebsschaltung (20) zu senden, wobei die Betriebsschaltung (20) einen Vergleich des an die erste Ausgabeeinheit (30) gesendeten Signals mit dem von der zweiten Ausgabeeinheit (40) erhaltenen Signal durchführt.

8. Messgerät nach einem der vorigen Ansprüche,
wobei die erste und/oder die zweite Ausgabeeinheit dazu eingerichtet ist, bei einer Mindestabweichung von mindestens einem Signalparameter der verglichenen Signale ein Warnsignal an ihrem jeweiligen elektrischen Signalausgang zu erzeugen.

9. Verfahren zum Betrieb eines Messgeräts nach einem der vorigen Ansprüche, wobei das Verfahren folgende Schritte umfasst:
Erfassen einer physikalischen oder chemischen Messgröße durch den Messaufnehmer (10) und Senden der Messgröße an die elektronische Betriebsschaltung (20);
Auswahl der mindestens einen ersten Ausgabeeinheit (30) durch die Betriebsschaltung (20) und Senden des ersten Signals (1) an die erste Ausgabeeinheit (30);
Empfang des ersten Signals (1) durch die erste Ausgabeeinheit (30) und Wandeln des ersten Signals (1) in das vierte Signal (4) und zweite Signal (2) und Ausgabe des vierten Signals (4) am elektrischen Signalausgang (33) und Ausgabe des zweiten Signals (2) am optischen Signalausgang (32);
Empfang des zweiten Signals (2) durch die zweite Ausgabeeinheit (40) und Wandeln des zweiten Signals (2)
in das fünfte Signal (5) und Ausgabe des fünften Signals (5) am elektrischen Signalausgang (43);

10. Verfahren zum Betrieb eines Messgeräts nach Anspruch 9,
wobei das Verfahren folgende Schritte umfasst:
Erfassen einer physikalischen oder chemischen Messgröße durch den Messaufnehmer (10) und Senden der Messgröße an die elektronische Betriebsschaltung (20);
Auswahl der mindestens einen ersten Ausgabeeinheit (30) durch die Betriebsschaltung (20 und Senden des ersten Signals (1) an die erste Ausgabeeinheit (30) und Senden des ersten Signals (1) an die zweite Ausgabeeinheit (40);
Empfang des ersten Signals (1) durch die erste Ausgabeeinheit (30) und Wandeln des ersten Signals (1) in das vierte Signal (4) und zweite Signal (2) und Ausgabe des vierten Signals (4) am elektrischen Signalausgang (33) und Ausgabe des zweiten Signals (2) am optischen Signalausgang (32);
Empfang des ersten Signals (1) und des zweiten Signals (2) durch die zweite Ausgabeeinheit (40) und Wandeln des zweiten Signals (2) in das fünfte Signal (5) und Ausgabe des fünften Signals (5) am elektrischen Signalausgang (43);
Vergleich des ersten Signals (1) mit dem zweiten Signal (2) durch die zweite Ausgabeeinheit (40) und Übermittlung des Ergebnisses des Vergleichs an die Betriebsschaltung (20) mittels eines dritten Signals (3).
Veranlassen der Ausgabe eines Warnsignals durch die erste und/oder die zweite Ausgabeeinheit an ihrem jeweiligen elektrischen Signalausgang durch die Betriebsschaltung (20) bei einer Mindestabweichung von mindestens einem Signalparameter der verglichenen Signale.

11. Verfahren zum Betrieb eines Messgeräts nach Anspruch 9,
wobei das Verfahren folgende Schritte umfasst:
Erfassen einer physikalischen oder chemischen Messgröße durch den Messaufnehmer (10) und Senden der Messgröße an die elektronische Betriebsschaltung (20);
Auswahl der mindestens einen ersten Ausgabeeinheit (30) durch die Betriebsschaltung (20) und Senden des ersten Signals (1) an die erste Ausgabeeinheit (30) und Senden des ersten Signals (1) an die zweite Ausgabeeinheit (40);
Empfang des ersten Signals (1) durch die erste Ausgabeeinheit (30) und Wandeln des ersten Signals (1) in das vierte Signal (4) und zweite Signal (2)
und Ausgabe des vierten Signals (4) am elektrischen Signalausgang (33) und Ausgabe des zweiten Signals (2) am optischen Signalausgang (32);
Empfang des zweiten Signals (2) durch die zweite Ausgabeeinheit (40) und Wandeln des zweiten Signals (2)
in das fünfte Signal (5) und Ausgabe des fünften Signals am elektrischen Signalausgang (43) und Wandeln des zweiten Signals in ein elektrisches Signal und
Senden des elektrischen Signals an die Betriebsschaltung (20);
Vergleich des an die erste Ausgabeeinheit (30) ersten Signals (1) mit dem von der zweiten Ausgabeeinheit (40) empfangenen zweiten Signal (2) durch die Betriebsschaltung (20).
Veranlassen der Ausgabe eines Warnsignals durch die erste und/oder die zweite Ausgabeeinheit (30, 40) an ihrem jeweiligen elektrischen Signalausgang (4, 5) durch die Betriebsschaltung (20) bei einer Mindestabweichung von mindestens einem Signalparameter der verglichenen Signale.

12. Verfahren zum Betrieb eines Messgeräts nach einem der Ansprüche 9-11, wobei dem fünften Signal (5) mindestens eine charakteristische Änderung nach Anspruch 5 aufgeprägt ist.

13. Verfahren zum Betrieb eines Messgeräts nach einem der Ansprüche 9-12, wobei mittels der Betriebsschaltung (20) nach Auswahl der ersten Ausgabeeinheit (30) eine Wahl zwischen das zweite Signal (2) vom ersten Signal (1) und das zweite Signal (2) vom vierten Signal (4) abzuleiten, durchgeführt wird.

## Claims

1. Measuring device, comprising:
a sensor (10) for measuring a physical or chemical measured variable and for generating at least one measured value corresponding to said measured variable;
an electronic operating circuit (20) electrically coupled to the sensor (10), wherein said operating circuit comprises at least a first communication interface (21), wherein the operating circuit (20) is designed to generate at least a first electronic signal (1) that correlates to the measured value and is transmitted via the first communication interface (21);
and at least a first output unit (30) with at least a second communication interface (31) and at least an electrical output (33) and at least an optical output (32), wherein the first output unit (30) is designed to receive the first signal (1) via the second communication interface (31) and to convert it into a fourth electrical signal (4) and into a second optical signal (2), wherein the fourth signal (4) is output via the electrical output (33) and the second signal is output via the optical output (32);
and at least a second output unit (40) comprising at least an optical input (42) and an electrical output (43);
wherein the optical input (42) of the second output unit (40) is coupled to the optical output (32) of the first output unit (30), wherein the second output unit (40) is designed to receive the second signal (2) via the optical input (42) and to convert it into a fifth electrical signal (5),
wherein the second output unit (40) has a third communication interface (41) to the operating circuit (20),
**characterized in that**
the operating circuit (20) is designed to also send the first signal (1) to the second output unit (40), wherein the second output unit (40) is designed to compare the first signal (1) sent by the operating circuit (20) with the second signal (2) received from the first output unit (30) and, after comparing the signals, to send a third signal (3) to the operating circuit (20) via the third communication interface (41), wherein the third signal (3) contains information about the result of the comparison.

2. Measuring device as claimed in Claim 1,
wherein the first output unit (30) derives the second optical signal (2) from the fourth signal (4).

3. Measuring device as claimed in Claim 1 or 2,
wherein, via the operating circuit (20), it is possible to choose between deriving the second signal (2) from the first signal (1) and deriving the second signal (2) from the fourth signal (4).

4. Measuring device as claimed in one of the previous claims,
wherein at least a parameter of the fifth signal (5) has a characteristic change in relation to the fourth signal (4), wherein the at least one parameter is selected from:
- the phase position in relation to the fourth signal,
- the frequency,
- the amplitude,
- the output time in relation to the fourth signal,
wherein the characteristic change can be determined by the operating circuit.

5. Measuring device as claimed in one of the previous claims,
wherein the at least two output units (30, 40) are galvanically isolated.

6. Measuring device as claimed in one of the previous claims,
wherein the at least one first output unit (30) and the at least one second output unit (40) are identical in terms of design and construction.

7. Measuring device as claimed in one of the previous claims,
wherein the second output unit (40) is/are designed to convert the second optical signal that is received (2) into an electrical signal and to send it to the operating circuit (20) via the third communication interface (41), wherein the operating circuit (20) compares the signal sent to the first output unit (30) to the signal received from the second output unit (40).

8. Measuring device as claimed in one of the previous claims,
wherein the first and/or the second output unit are designed to generate a warning signal at their respective electrical signal output in the event of a minimum deviation of at least one signal parameter of the compared signals.

9. Procedure designed to operate a measuring device as claimed in one of the previous claims, wherein said procedure comprises the following steps:
Recording of a physical or chemical measured variable by the sensor (10) and transmission of the measured variable to the electronic operating circuit (20);
Selection of the at least one first output unit (30) by the operating circuit (20) and transmission of the first signal (1) to the first output unit (30);
Receipt of the first signal (1) by the first output unit (30) and conversion of the first signal (1) to the fourth signal (4) and the second signal (2) and outputting of the fourth signal (4) at the electrical signal output (33) and outputting of the second signal (2) at the optical signal output (32);
Receipt of the second signal (2) by the second output unit (40) and conversion of the second signal (2) to the fifth signal (5) and outputting of the fifth signal (5) at the electrical signal output (43).

10. Procedure to operate a measuring device as claimed in Claim 9,
wherein said procedure comprises the following steps:
Recording of a physical or chemical measured variable by the sensor (10) and transmission of the measured variable to the electronic operating circuit (20);
Selection of the at least one first output unit (30) by the operating circuit (20) and transmission of the first signal (1) to the first output unit (30) and transmission of the first signal (1) to the second output unit (40);
Receipt of the first signal (1) by the first output unit (30) and conversion of the first signal (1) to the fourth signal (4) and the second signal (2) and outputting of the fourth signal (4) at the electrical signal output (33) and outputting of the second signal (2) at the optical signal output (32);
Receipt of the first signal (1) and the second signal (2) by the second output unit (40) and conversion of the second signal (2) to the fifth signal (5) and outputting of the fifth signal (5) at the electrical signal output (43);
Comparison of the first signal (1) with the second signal (2) by the second output unit (40) and transmission of the result of the comparison to the operating circuit (20) by means of a third signal (3).
Triggering, by the operating circuit (20), of the generation of a warning signal by the first and/or the second output unit at the particular electrical signal output in the event of a minimum deviation of at least one signal parameter of the compared signals.

11. Procedure to operate a measuring device as claimed in Claim 9,
wherein said procedure comprises the following steps:
Recording of a physical or chemical measured variable by the sensor (10) and transmission of the measured variable to the electronic operating circuit (20);
Selection of the at least one first output unit (30) by the operating circuit (20) and transmission of the first signal (1) to the first output unit (30) and transmission of the first signal (1) to the second output unit (40);
Receipt of the first signal (1) by the first output unit (30) and conversion of the first signal (1) to the fourth signal (4) and the second signal (2) and outputting of the fourth signal (4) at the electrical signal output (33) and outputting of the second signal (2) at the optical signal output (32);
Receipt of the second signal (2) by the second output unit (40) and conversion of the second signal (2) to the fifth signal (5) and outputting of the fifth signal at the electrical signal output (43) and conversion of the second signal to an electrical signal and transmission of the electrical signal to the operating circuit (20);
Comparison by the operating circuit (20) of the first signal (1) sent to the first output unit (30) with the second signal (2) received from the second output unit (40);
Triggering, by the operating circuit (20), of the generation of a warning signal by the first and/or the second output unit (30, 40) at the particular electrical signal output (4, 5) in the event of a minimum deviation of at least one signal parameter of the compared signals.

12. Procedure for the operation of a measuring device as claimed in one of the Claims 9 to 11,
wherein at least one characteristic change as claimed in Claim 5 is applied to the fifth signal (5).

13. Procedure for the operation of a measuring device as claimed in one of the Claims 9 to 12,
wherein, following the selection of the first output unit (30), a choice is made between deriving the second signal (2) from the first signal (1) and deriving the second signal (2) from the fourth signal (4) using the operating circuit (20).

## Revendications

1. Appareil de mesure, comprenant :
un capteur (10) destiné à mesurer une grandeur de mesure physique ou chimique et à générer au moins une valeur mesurée correspondant à la dite grandeur de mesure ;
un circuit d'exploitation électronique (20) couplé électriquement au capteur (10), lequel circuit d'exploitation comprend au moins une première interface de communication (21),
le circuit d'exploitation (20) étant conçu pour générer au moins un premier signal électronique (1) en corrélation avec la valeur mesurée, lequel premier signal est transmis via la première interface de communication (21) ;
et au moins une première unité de sortie (30) comprenant au moins une deuxième interface de communication (31) et au moins une sortie électrique (33) et au moins une sortie optique (32), la première unité de sortie (30) étant conçue pour recevoir le premier signal (1) via la deuxième interface de communication (31) et pour le convertir en un quatrième signal électrique (4) et en un deuxième signal optique (2), le quatrième signal (4) étant émis via la sortie électrique (33) ainsi que le deuxième signal via la sortie optique (32) ;
et au moins une deuxième unité de sortie (40) comprenant au moins une entrée optique (42) et une sortie électrique (43) ;
l'entrée optique (42) de la deuxième unité de sortie (40) étant couplée à la sortie optique (32) de la première unité de sortie (30), la deuxième unité de sortie (40) étant conçue pour recevoir le deuxième signal (2) par l'intermédiaire de l'entrée optique (42) et pour le convertir en un cinquième signal électrique (5),
la deuxième unité de sortie (40) comportant une troisième interface de communication (41) avec le circuit d'exploitation (20),
**caractérisé en ce que**
le circuit d'exploitation (20) est conçu pour envoyer le premier signal (1) également à la deuxième unité de sortie (40), la deuxième unité de sortie (40) étant conçue pour comparer le premier signal (1) envoyé par le circuit d'exploitation (20) avec le deuxième signal (2) reçu de la première unité de sortie (30) et, après comparaison des signaux,
pour envoyer un troisième signal (3) au circuit d'exploitation (20) par l'intermédiaire de la troisième interface de communication (41), le troisième signal (3) contenant des informations sur le résultat de la comparaison.

2. Appareil de mesure selon la revendication 1,
pour lequel la première unité de sortie (30) dérive le deuxième signal optique (2) du quatrième signal (4).

3. Appareil de mesure selon la revendication 1 ou 2,
pour lequel un choix entre dériver le deuxième signal (2) du premier signal (1) et dériver le deuxième signal (2) du quatrième signal (4) peut être effectué au moyen du circuit d'exploitation (20).

4. Appareil de mesure selon l'une des revendications précédentes,
pour lequel au moins un paramètre du cinquième signal (5) présente une variation caractéristique par rapport au quatrième signal (4), ledit au moins un paramètre étant choisi parmi :
- la position de phase par rapport au quatrième signal,
- la fréquence,
- l'amplitude,
- l'instant de sortie par rapport au quatrième signal,
la variation caractéristique pouvant être déterminée par le circuit d'exploitation.

5. Appareil de mesure selon l'une des revendications précédentes,
pour lequel les au moins deux unités de sortie (30, 40) sont séparées galvaniquement.

6. Appareil de mesure selon l'une des revendications précédentes,
pour lequel l'au moins une première unité de sortie (30) et l'au moins une deuxième unité de sortie (40) sont de construction identique.

7. Appareil de mesure selon l'une des revendications précédentes,
pour lequel la deuxième unité de sortie (40) est conçue pour convertir le deuxième signal optique reçu (2) en un signal électrique et envoyer ce dernier au circuit d'exploitation (20) par l'intermédiaire de la troisième interface de communication (41), le circuit d'exploitation (20) effectuant une comparaison du signal envoyé à la première unité de sortie (30) avec le signal reçu de la deuxième unité de sortie (40).

8. Appareil de mesure selon l'une des revendications précédentes,
pour lequel la première et/ou la deuxième unité de sortie sont conçues pour générer un signal d'avertissement sur leur sortie de signal électrique respective en cas d'écart minimum d'au moins un paramètre de signal parmi les signaux comparés.

9. Procédé destiné à l'exploitation d'un appareil de mesure selon l'une des revendications précédentes, lequel procédé comprend les étapes suivantes :
Acquisition d'une grandeur de mesure physique ou chimique par le capteur (10) et envoi de la grandeur de mesure au circuit d'exploitation électronique (20) ;
Sélection d'au moins une première unité de sortie (30) par le circuit d'exploitation (20) et envoi du premier signal (1) à la première unité de sortie (30) ;
Réception du premier signal (1) par la première unité de sortie (30) et conversion du premier signal (1) en le quatrième signal (4) et le deuxième signal (2) et sortie du quatrième signal (4) à la sortie de signal électrique (33) et sortie du deuxième signal (2) à la sortie de signal optique (32) ;
Réception du deuxième signal (2) par la deuxième unité de sortie (40) et conversion du deuxième signal (2) en le cinquième signal (5) et sortie du cinquième signal (5) à la sortie de signal électrique (43).

10. Procédé destiné à l'exploitation d'un appareil de mesure selon la revendication 9, lequel procédé comprend les étapes suivantes :
Acquisition d'une grandeur de mesure physique ou chimique par le capteur (10) et envoi de la grandeur de mesure au circuit d'exploitation électronique (20) ;
Sélection d'au moins une première unité de sortie (30) par le circuit d'exploitation (20) et envoi du premier signal (1) à la première unité de sortie (30) et envoi du premier signal (1) à la deuxième unité de sortie (40) ;
Réception du premier signal (1) par la première unité de sortie (30) et conversion du premier signal (1) en le quatrième signal (4) et le deuxième signal (2) et sortie du quatrième signal (4) à la sortie de signal électrique (33) et sortie du deuxième signal (2) à la sortie de signal optique (32) ;
Réception du premier signal (1) et du deuxième signal (2) par la deuxième unité de sortie (40) et conversion du deuxième signal (2) en le cinquième signal (5) et sortie du cinquième signal (5) à la sortie de signal électrique (43) ;
Comparaison du premier signal (1) avec le deuxième signal (2) par la deuxième unité de sortie (40) et transmission du résultat de la comparaison au circuit de fonctionnement (20) au moyen d'un troisième signal (3).
Déclenchement par le circuit d'exploitation (20) de la sortie d'un signal d'avertissement par la première et/ou la deuxième unité de sortie à leur sortie de signal électrique respective en cas d'écart minimum d'au moins un paramètre de signal parmi les signaux comparés.

11. Procédé destiné à l'exploitation d'un appareil de mesure selon la revendication 9,
lequel procédé comprend les étapes suivantes :
Acquisition d'une grandeur de mesure physique ou chimique par le capteur (10) et envoi de la grandeur de mesure au circuit d'exploitation électronique (20) ;
Sélection d'au moins une première unité de sortie (30) par le circuit d'exploitation (20) et envoi du premier signal (1) à la première unité de sortie (30) et envoi du premier signal (1) à la deuxième unité de sortie (40) ;
Réception du premier signal (1) par la première unité de sortie (30) et conversion du premier signal (1) en le quatrième signal (4) et le deuxième signal (2) et sortie du quatrième signal (4) à la sortie de signal électrique (33) et sortie du deuxième signal (2) à la sortie de signal optique (32) ;
Réception du deuxième signal (2) par la deuxième unité de sortie (40) et conversion du deuxième signal (2) en le cinquième signal (5) et sortie du cinquième signal à la sortie de signal électrique (43) et conversion du deuxième signal en un signal électrique et envoi du signal électrique au circuit d'exploitation (20) ;
Comparaison par le circuit d'exploitation (20) du premier signal (1) envoyé à la première unité de sortie (30) avec le deuxième signal (2) reçu de la deuxième unité de sortie (40) ;
Déclenchement par le circuit d'exploitation (20) de la sortie d'un signal d'avertissement par la première et/ou la deuxième unité de sortie (30, 40) à leur sortie de signal électrique (4, 5) respective en cas d'écart minimal d'au moins un paramètre de signal parmi les signaux comparés.

12. Procédé destiné à l'exploitation d'un appareil de mesure selon l'une des revendications 9 à 11,
pour lequel au moins une variation caractéristique selon la revendication 5 est appliquée au cinquième signal (5).

13. Procédé destiné à l'exploitation d'un appareil de mesure selon l'une des revendications 9 à 12,
pour lequel on effectue, au moyen du circuit d'exploitation (20), après sélection de la première unité de sortie (30), un choix entre dériver le deuxième signal (2) du premier signal (1) et dériver le deuxième signal (2) du quatrième signal (4).
